# EUROPÄISCHE PATENTSCHRIFT

(11) **EP 2 169 491 B1**
(45) Veröffentlichungstag und Bekanntmachung des Hinweises auf die Patenterteilung: **10.04.2013**
(21) Anmeldenummer: 08017066.5
(22) Anmeldetag: 27.09.2008
(51) Int. Cl.: G05B 19/408

(54) **Unterstützungssystem und Verfahren zur Optimierung von Bearbeitungsparametern und/oder Regelparametern**
Support system and method for optimising process parameters and/or regulating parameters
Système de support et méthode d'optimisation de paramètres de procédé et/ou de paramètres de réglage

(43) Veröffentlichungstag der Anmeldung: 31.03.2010
(73) Patentinhaber: TRUMPF Werkzeugmaschinen GmbH + Co. KG, 71254 Ditzingen (DE)
(72) Erfinder: Mienhardt, Uwe, 70825 Korntal-Münchingen (DE); Schlotter, Mathias, 70825 Korntal-Münchingen (DE); Rupp, Thomas, 71638 Ludwigsburg (DE)
(74) Vertreter: Kohler Schmid Möbus

(56) Entgegenhaltungen:
- EP-A- 0 311 703
- US-A1- 2007 244 599
- CHUA M. S. ET AL.: "Determination of optimal cutting conditions using design of experiments and optimization techniques" INTERNATIONAL JOURNAL OF MACHINE TOOLS AND MANUFACTURE, GREAT BRITAIN, Bd. 33, Nr. 2, April 1993 (1993-04), Seiten 297-305, XP002518123
- MUKHERJEE ET AL.: "A review of optimization techniques in metal cutting processes" COMPUTERS & INDUSTRIAL ENGINEERING, PERGAMON, Bd. 50, Nr. 1-2, 1. Mai 2006 (2006-05-01), Seiten 15-34, XP005481921 ISSN: 0360-8352

## Beschreibung

Die vorliegende Erfindung betrifft ein Unterstützungssystem sowie ein Verfahren zur Optimierung von Bearbeitungsparametern und/oder Regelparametern eines Laserbearbeitungsprozesses, insbesondere eines Laserschneidprozesses, sowie ein Computerprogrammprodukt zur Durchführung des Verfahrens.

An Laserbearbeitungsmaschinen sind in Entwicklungs-, Schulungs- und Vorführabteilungen des Herstellers, bei Kundendiensteinsätzen oder auch durch den Kunden Tests, d.h. Versuchsreihen für die Ermittlung von für einen vorgegebenen Bearbeitungsprozess geeigneten Bearbeitungsparametern und/oder Regelparametern erforderlich, da diese in Abhängigkeit von der gewählten Bearbeitungsaufgabe stark variieren können.

So können mit einer Laserbearbeitungsmaschine unterschiedlichste Werkstoffe bearbeitet werden, wie z.B. Baustahl (unbeschichtet, elektrolytisch oder feuerverzinkt), rostfreier Stahl oder Aluminium. Je nach Material und Dicke des zu bearbeitenden Werkstücks kommen z.B. beim Laserschneiden unterschiedliche Schneidverfahren (Sauerstoffschneiden, Stickstoff-Hochdruckschneiden, Stickstoff-, Sauerstoff- oder Druckluft-Hochgeschwindigkeitsschneiden, Druckluftschneiden oder plasmaunterstütztes Schneiden) zum Einsatz. In Abhängigkeit von Werkstoff, Werkstückdicke und Schneidverfahren müssen unterschiedlichste technologische Randbedingungen berücksichtigt werden, z.B. Einstech- und Anfahrmethoden, geometrische Grenzwerte beim Anfahren und bei den Konturgrößen, minimale Rundungsradien oder Abstände zu Nachbarteilen. Außerdem können Laserschneidmaschinen mit Lasern unterschiedlicher Leistung ausgestattet werden.

Prozesssichere und qualitativ hochwertige Bearbeitungsergebnisse können nur erzielt werden, wenn die je nach Materialart, Materialdicke und Schneidverfahren variierenden Randbedingungen genau berücksichtigt werden. Zur Steuerung der Materialbearbeitung mit einer Laserschneidmaschine unter Berücksichtigung der einzuhaltenden Randbedingungen müssen daher für jeden Lasertyp verschiedene Parameter-Datensätze bekannt sein oder ermittelt werden. Ein solcher Datensatz besteht typischer Weise aus Bearbeitungsparametern und Regelparametern. Die Bearbeitungsparameter umfassen z.B. die Fokuslage, die Laserleistung, den Gasdruck, die Verfahrgeschwindigkeit, die Tastfrequenz, den Laserstrahldurchmesser, den Düsenabstand zum Werkstück und den Düsendurchmesser und beinhalten (Zahlen-)Werte für das prozesssichere Einstechen, Schneiden von unterschiedlichen Konturgrößen, Kennzeichnen, Körnen, Abdampfen und Schweißen. Die Regelparameter definieren abhängig von der auszuführenden Bearbeitung, unter welchen Bedingungen was gemacht werden soll, d.h. welche Bearbeitungsparameter im Steuerungsprogramm der Bearbeitungsmaschine aufgerufen werden und welche geometrischen Randbedingungen (z.B. Anfahrlängen in Abhängigkeit von der Werkstückdicke, notwendige Rundungsradien an Ecken der Kontur, minimal zulässige Konturen,...) einzuhalten sind.

Bei der Ermittlung oder Überprüfung solcher Datensätze für die Steuerung der Lasermaterialbearbeitung ergeben sich folgende Aufgaben: Die Ermittlung und Optimierung von geeigneten Bearbeitungsparametern für verschiedene Bearbeitungsarten wie Einstechen, Schneiden, Kennzeichnen, Körnen, Abdampfen, Schweißen unter Berücksichtigung der Regelparameter, die Ermittlung von Regelparametern, die Absicherung der Bearbeitungsparameter und Regelparameter für die verschiedenen Bearbeitungsarten im Maschinendauerlauf, sowie die Erzeugung von produktionsnahen Testteilen unter Verwendung der Bearbeitungsparameter für die verschiedenen Bearbeitungsarten. Dieser Verfahrensablauf muss vor der Produktion, d.h. schon von dem Bearbeitungsprozess sicherstellen, dass das Zusammenspiel aus den verfügbaren Bearbeitungsparametern, dem zu bearbeitenden Material und dem Maschinenzustand eine prozesssichere Produktion ermöglicht.

Üblicherweise werden die genannten Aufgaben von Maschinenbedienern durchgeführt, die aufgrund ihrer Erfahrung geeignete Testprogramme erstellen, die von der Laserbearbeitungsmaschine abgearbeitet werden. Für jede Aufgabe und jedes zu bearbeitende Material wird hierbei ein eigenes Steuerungsprogramm programmiert. Diese Vorgehensweise ist sehr zeitaufwändig, und ein einheitliches Vorgehen durch unterschiedliche Bediener lässt sich nur mit hohem Dokumentations- und Informationsaufwand sicherstellen.

Aus der US 2007/0055403 A1 sind ein System und ein Verfahren zur Durchführung von Prozessen zur Bearbeitung eines Werkstücks bekannt geworden, zu deren Charakterisierung eine statistische Versuchsplanung (engl. "Design of Experiments", DoE) durchgeführt wird. Die bei der Durchführung der Versuche gewonnenen Daten werden zur Aufstellung eines Störungsmodells für die Effizienz des Prozesses herangezogen. Mit Hilfe eines Optimierungsmoduls können anhand des Störungsmodells Einflussgrößen des Prozesses geeignet angepasst werden.

In der US 7016754 B2 ist ein Verfahren zur Steuerung der von mindestens einer Einflussgröße abhängigen Bearbeitung eines Substrats beschrieben. In einem Schritt des Verfahrens wird ein Prozessmodell erstellt, welches der Veränderung von Steuerparametern einer zur Bearbeitung verwendeten Vorrichtung Veränderungen des Prozesses zuordnet. Aus dem Prozessmodell können optimierte Steuerparameter für eine Steuereinrichtung abgeleitet werden. Bei dem Prozessmodell wird eine Regressionsgleichung erster Ordnung ohne Wechselwirkungsterme verwendet.

Die EP 0 991 493 B1 beschreibt ein Unterstützungssystem für eine Laserstrahlmaschine, umfassend: ein Eingabegerät zur Eingabe mehrerer Auswertungsparameter, die Ergebnisse der Auswertung eines aktuellen Betriebszustands der Laserstrahlmaschine darstellen, eine Schätzwerterzeugungseinheit, die einen Schätzwert für jeden einer Vielzahl von Bearbeitungszustandsparametern erzeugt, die für Bedingungen, unter denen die Laserbearbeitung ausgeführt wird, charakteristisch sind, einen Bearbeitungszustandsparameter-Auswahlabschnitt zum Auswählen eines Bearbeitungszustandsparameters, der am effektivsten ist, um den aktuellen Bearbeitungszustand gemäß den durch das Eingabegerät eingegebenen Auswertungsparametern zu verändern, sowie ein Anzeigegerät zum Anzeigen des durch die Schätzwerterzeugungseinheit erzeugten Schätzwerts.

Aus der DE 35 45 158 C2 ist ein adaptives Regelungsverfahren für Schweißprozesse bekannt geworden, das eine Adaption auf neue Prozessbedingungen, z.B. eine andere Werkstückgeometrie oder ein anderes Material mit relativ schneller Konvergenz leisten soll. Um den Schweißprozess nahe eines Qualitäts-Optimums zu halten wird eine statistische Variation der Prozessparameter innerhalb von vorgegebenen Grenzen durchgeführt, um Änderungen der externen Einflussgrößen durch geeignete Adaption auszugleichen.

Aus der EP 0 311 703 A1 ist ein Verfahren zum Steuern einer Werkzeugmaschine bekannt geworden, bei dem die Bearbeitungsparameter durch die gegenseitige Zuardnung von unterschiedlichen Daten und Größen aufgrund von bekannten und gespeicherten Zusammenhängen optimiert werden.

### Aufgabe der Erfindung

Es ist die Aufgabe der vorliegenden Erfindung, ein Unterstützungssystem für einen Bediener einer Laserbearbeitungsmaschine sowie ein zugehöriges Verfahren bereitzustellen, die den Bediener bei der Optimierung von Bearbeitungs- und/oder Regelparametern eines Laserbearbeitungsprozesses unterstützen.

### Gegenstand der Erfindung

Diese Aufgabe wird gelöst durch ein Unterstützungssystem der eingangs genannten Art, umfassend: eine Eingabefunktion zur Festlegung von mindestens einer für den Laserbearbeitungsprozess charakteristischen Prozessgröße sowie von mindestens einer für das Bearbeitungsergebnis des Laserbearbeitungsprozesses charakteristischen Zielgröße insbesondere durch einen Bediener, eine Grenzwertfunktion zur Festlegung von Grenzwerten für die Bearbeitungsparameter und/oder Regelparameter in Abhängigkeit von der mindestens einen Prozessgröße, eine Versuchsplanungsfunktion zur Festlegung eines Versuchsplans für Bearbeitungsversuche mit statistischer Variation der Bearbeitungsparameter und/oder Regelparameter innerhalb der festgelegten Grenzwerte, eine Versuchsdurchführungs- und Bewertungsfunktion zur Steuerung der Durchführung der Bearbeitungsversuche sowie zur Bewertung der Versuchsergebnisse anhand der mindestens einen Zielgröße, eine Modellbildungsfunktion zur Bildung eines Modells für den Laserbearbeitungsprozess durch Ermitteln des Einflusses der Bearbeitungsparameter und/oder Regelparameter auf die mindestens eine Zielgröße mit Hilfe einer Regressionsanalyse, sowie eine Optimierungsfunktion zur Bestimmung von optimierten Bearbeitungsparametern und/oder Regelparametern für die mindestens eine Zielgröße mit Hilfe des Modells.

Ein solches Unterstützungssystem kommt unter anderem dann zum Einsatz, wenn unbekannte Materialien bearbeitet werden sollen, die mit den in der Maschinensteuerung bereits gespeicherten Parameter-Datensätzen nicht bearbeitbar sind, wenn sich durch die Alterung von Maschinenkomponenten die optimalen Bearbeitungsparameter verändern und angepasst werden müssen oder wenn spezielle Anforderungen oder Wünsche des Bedieners hinsichtlich bestimmter Parameter (z.B. möglichst niedriger Schneidgasdruck) bestehen und die Bearbeitung auf diese Randbedingungen optimiert werden soll. Die Funktionen des Unterstützungssystems können als Hardware- oder Softwarekomponenten implementiert werden und sind in der Regel in die Laserbearbeitungsmaschine integriert.

In einer vorteilhaften Ausführungsform umfasst das Unterstützungssystem eine Konturauswahlfunktion zur Festlegung von bei den Bearbeitungsversuchen zu bearbeitenden, insbesondere zu schneidenden Versuchskonturen in Abhängigkeit von der mindestens einen Prozessgröße. Die Konturauswahlfunktion dient der Festlegung einer technologisch geeigneten zu bearbeitenden Versuchskontur auf Basis der Prozessgrößen. Zu diesem Zweck enthält die Konturauswahlfunktion vorzugsweise Kontur-Variablen, deren Wertebelegung in Abhängigkeit von den Prozessgrößen erfolgt. Die Kontur-Variablen umfassen beispielsweise die Art der Testkontur (z.B. Mäander, Einzelquadrate, Langloch-Mäander für schnelles Schneiden etc.), die Konturgröße, den Konturabstand oder den Kontureckenrundungsradius. Für die Wertebelegung der Kontur-Variablen kann das Unterstützungssystem mit Konturparameter-Datentabellen verknüpft sein, aus denen es die Werte in Abhängigkeit von den festgelegten Prozessgrößen entnimmt.

Bevorzugt umfasst das Unterstützungssystem eine Bearbeitungsfunktion zur Bearbeitung der Grenzwerte durch den Bediener. Auf diese Weise wird es dem Bediener ermöglicht, die automatisch festgelegten Grenzwerte und damit den durch den Versuchsplan abgedeckten Parameterraum der Bearbeitungs- und/oder Regelparameter zu beeinflussen.

Besonders bevorzugt umfasst das Unterstützungssystem weiterhin eine Anpassungsfunktion zur Anpassung der Grenzwerte der Bearbeitungsparameter und/oder Regelparameter für einen weiteren Versuchsplan bei Ablehnung der optimierten Bearbeitungsparameter und/oder Regelparameter durch den Bediener. Die Anpassungsfunktion dient der verfeinerten Optimierung der Parameter, wenn die optimierten Bearbeitungs- und/oder Regelparameter für den Bediener nicht akzeptabel sind. Die Grenzwerte können dabei inner- oder außerhalb des zuvor untersuchten Parameterraums liegen.

In einer vorteilhaften Ausführungsform umfasst das Unterstützungssystem eine Datenbank zur Speicherung der Grenzwerte, der Versuchspläne und/oder der Versuchskonturen. Um die Grenzwerte für einen stabilen, reproduzierbaren Bearbeitungsprozess bei festgelegten Prozessgrößen zu bestimmen, greift das Unterstützungssystem bevorzugt auf eine Datenbank zu, in der diese Grenzwerte für die möglichen Kombinationen von Prozessgrößen gespeichert sind. Damit bildet die Datenbank einen Wissensspeicher mit Expertenwissen über den Prozess. Auch eine selbstlernende Datenbank ist möglich, deren Datenbestand sich auf der Basis der durchgeführten Parameteroptimierungen fortlaufend erweitert. In der Datenbank sind auch grundlegende Versuchspläne gespeichert, die je nach der gewählten Kombination der Prozessgrößen eine Variation aller Bearbeitungs- bzw. Regelparameter oder lediglich eine Variation ausgewählter Bearbeitungs- bzw. Regelparameter festlegen und an die Grenzwerte angepasst werden.

Bevorzugt sind die Prozessgrößen ausgewählt aus der Gruppe umfassend: Materialart, Materialdicke, Gasart, Brennweite der Fokussieroptik und Bearbeitungsart. Als Prozessgrößen für die Optimierung der Bearbeitungs- und/oder Regelparameter müssen typischer Weise zumindest die Materialart und die Dicke des zu bearbeitenden Werkstücks bekannt sein. Außerdem muss die gewünschte Bearbeitungsart vorgegeben werden. Die Materialart und die Werkstückdicke können vom Bediener eingegeben oder ggf. mit Hilfe von geeigneten Sensoren erfasst werden. Die Bearbeitungsart wird in der Regel durch den Bediener vorgegeben und kann ausgewählt werden aus der Gruppe umfassend: Einstechen, Stickstoffschneiden, Sauerstoffschneiden, Stickstoff-Hochdruckschneiden, Stickstoff-, Sauerstoff- oder Druckluft-Hochgeschwindigkeitsschneiden, Druckluftschneiden, plasmaunterstütztes Schneiden, Kennzeichnen, Körnen, Abdampfen, Schweißen, etc.

In einer vorteilhaften Ausführungsform sind die Bearbeitungsparameter ausgewählt aus der Gruppe umfassend: Laserleistung, Fokuslage, Bearbeitungsgeschwindigkeit, Tastfrequenz, Bearbeitungsgasdruck, Laserstrahldurchmesser, Düsenabstand und Düsendurchmesser. Diese acht Bearbeitungsparameter sind bei Laserbearbeitungsprozessen typischer Weise einstellbar und können daher auf die oben beschriebene Weise optimiert werden.

In einer weiteren bevorzugten Ausführungsform sind die Zielgrößen ausgewählt aus der Gruppe umfassend: Gratbildung, Homogenität der Schnittkante, Qualität bei maximaler Bearbeitungsgeschwindigkeit oder minimalem Gasverbrauch, Rautiefe und minimale Schneidfehler (z.B. Kolkungen oder Auswaschungen). Der Bediener entscheidet, was das Ziel der Parameteroptimierung sein soll, beispielsweise minimale Gratbildung, größtmögliche Homogenität der Schnittkante, geringe Rautiefe etc. Dabei kann der Bediener einen einzelnen Zielwert oder auch eine Kombination von Zielwerten als Grundlage der Optimierung auswählen.

In einer besonders vorteilhaften Ausführungsform umfasst die Modellbildungsfunktion zur Ermittlung des Einflusses der Bearbeitungsparameter und/oder Regelparameter auf die mindestens eine Zielgröße eine Regressionsgleichung zweiter Ordnung mit Wechselwirkungstermen, die in Abhängigkeit von den festgelegten Prozessgrößen und Zielgrößen bei der Modellbildung berücksichtigt oder vernachlässigt werden. In einer Datenbank, die einen Wissensspeicher mit Expertenwissen über die zu optimierenden Bearbeitungsprozesse bildet, kann in Abhängigkeit von den Prozessgrößen hinterlegt werden, ob die Wechselwirkung von zwei Bearbeitungsparametern bzw. Regelparametern auf eine jeweilige Zielgröße bei der Modellbildung berücksichtigt werden soll. Ist vor der Optimierung bekannt, dass der Einfluss des jeweiligen Wechselwirkungsterms auf die Zielgröße gering ist, kann dieser Wechselwirkungsterm bei der Regressionsanalyse unberücksichtigt bleiben, was zu einer Reduzierung der bei der Regressionsanalyse zu bestimmenden Koeffizienten führt. Entsprechend verringert sich auch die notwendige Anzahl der Versuche im Versuchsplan.

Die Erfindung ist auch verwirklicht in einem Steuerungsverfahren zum Optimieren von Bearbeitungsparametern und/oder Regelparametern eines Laserbearbeitungsprozesses, insbesondere eines Laserschneidprozesses, mit Hilfe des Unterstützungssystems umfassend: Festlegen mindestens einer für den Laserbearbeitungsprozess charakteristischen Prozessgröße sowie mindestens einer für das Bearbeitungsergebnis des Laserbearbeitungsprozesses charakteristischen Zielgröße insbesondere durch einen Bediener, Festlegen von Grenzwerten für die Bearbeitungsparameter und/oder Regelparameter auf Basis der Prozessgrößen durch das Unterstützungssystem, Festlegen eines Versuchsplans für Bearbeitungsversuche mit statistischer Variation der Bearbeitungsparameter und/oder Regelparameter innerhalb der festgelegten Grenzwerte durch das Unterstützungssystem, Steuern der Durchführung der Bearbeitungsversuche sowie Bewerten der Versuchsergebnisse anhand der mindestens einen Zielgröße, Bilden eines Modells für den Laserbearbeitungsprozess durch Ermitteln des Einflusses der Bearbeitungsparameter und/oder Regelparameter auf die mindestens eine Zielgröße mit Hilfe einer Regressionsanalyse durch das Unterstützungssystem, sowie Bestimmen von optimierten Bearbeitungsparametern und/oder Regelparametern für die mindestens eine Zielgröße mit Hilfe des Modells.

Bevorzugt umfasst das Verfahren weiterhin: Festlegen von bei den Bearbeitungsversuchen zu bearbeitenden, insbesondere zu schneidenden Versuchskonturen in Abhängigkeit von der mindestens einen Prozessgröße durch das Unterstützungssystem. Wie oben bereits dargestellt, dient die Konturauswahl der Festlegung einer technologisch geeigneten Versuchskontur für die Bearbeitungsversuche auf Basis der Prozessgrößen.

Bevorzugt umfasst das Verfahren weiterhin: Anpassen der Grenzwerte der Bearbeitungsparameter und/oder Regelparameter für einen gegebenenfalls auszuführenden Folge-Versuchsplan durch das Unterstützungssystem, wenn die optimierten Bearbeitungsparameter und/oder Regelparameter durch einen Bediener abgelehnt wurden, um ggf. innerhalb der getesteten Parametergrenzen eine Feinoptimierung durchzuführen. Wenn innerhalb der getesteten Parameter-Grenzwerte keine optimierten Bearbeitungsparameter und/oder Regelparameter bestimmt werden können, ist es auch möglich, eine Erweiterung der Grenzwerte für die Durchführung eines Folge-Versuchsplans außerhalb der getesteten Parametergrenzen vorzusehen.

In einer vorteilhaften Variante wird zur Ermittlung des Einflusses der Bearbeitungsparameter und/oder Regelparameter auf die mindestens eine Zielgröße eine Regressionsgleichung zweiter Ordnung mit Wechselwirkungstermen aufgestellt, die in Abhängigkeit von den festgelegten Prozessgrößen und Zielgrößen bei der Modellbildung berücksichtigt oder vernachlässigt werden. Wie ebenfalls oben beschrieben kann auf diese Weise die Modellbildung vereinfacht und die Zahl der benötigten Versuche reduziert werden.

In einer besonders vorteilhaften Variante wird mindestens ein Bearbeitungsparameter und/oder Regelparameter im Rahmen des Versuchsplans nicht statistisch variiert. Je nach der gewählten Kombination der Prozessgrößen umfasst der Versuchsplan also eine Variation aller Bearbeitungs- bzw. Regelparameter oder auch eine Variation ausgewählter Bearbeitungsparameter, während andere Parameter auf einen festen Wert gesetzt oder beim Durchführen der Bearbeitungsversuche kontinuierlich, d.h. in fest vorgegebenen Intervallen variiert werden. Einen oder mehrere Parameter nicht statistisch zu variieren reduziert die notwendige Zahl der Versuche im Versuchsplan und ist dann sinnvoll, wenn bereits vor der Optimierung bekannt ist, dass bestimmte Bearbeitungsparameter einen festen Wert haben müssen oder sollen oder dass die Variation bestimmter Parameter keinen Einfluss auf das Versuchsergebnis hat.

Die Erfindung ist auch verwirklicht in einem Computerprogrammprodukt, welches Codemittel aufweist, die zum Durchführen aller Schritte des oben beschriebenen Verfahrens angepasst sind, wenn das Programm auf einer Datenverarbeitungsanlage abläuft. Das Computerprogrammprodukt kann bevorzugt als Software realisiert sein, welche die oben beschriebenen Funktionen zur Verfügung stellt. Als Datenverarbeitungsanlage zum Ablauf der Software kann eine Steuerungseinheit der Laserbearbeitungsmaschine dienen, über die auch eine Bedienoberfläche zur Eingabe bzw. Anzeige von Daten zur Verfügung gestellt werden kann.

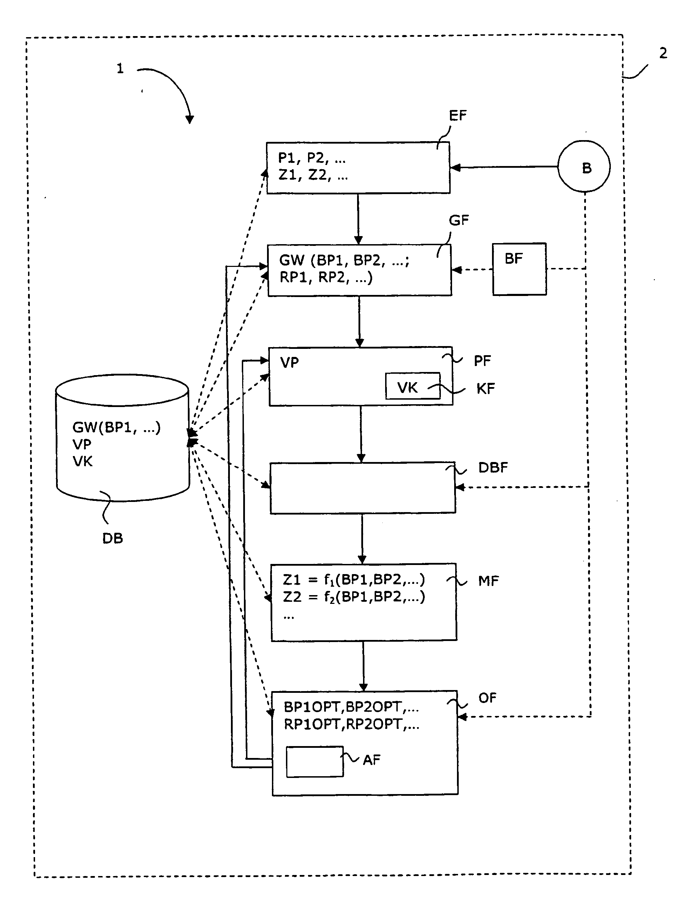

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Es zeigt:

- Figur: eine schematische Darstellung einer Ausführungsform des erfindungsgemäßen Unterstützungssystems.

Die **Figur** zeigt ein Unterstützungssystem **1** für einen Bediener **B** einer Laserbearbeitungsmaschine **2** zur Optimierung von Bearbeitungsparametern **BP1, BP2, ...** und/oder Regelparametern **RP1, RP2, ...** eines Laserbearbeitungsprozesses mit den folgenden Komponenten: einer Eingabefunktion **EF,** einer Grenzwertfunktion **GF,** einer Versuchsplanungsfunktion **PF,** einer Versuchsdurchführungs- und Bewertungsfunktion **DBF,** einer Modellbildungsfunktion **MF** sowie einer Optimierungsfunktion **OF.** Weiterhin weist das Unterstützungssystem 1 eine Datenbank **DB** zur Speicherung von Daten auf, die mit oben genannten Komponenten in Verbindung steht und die als Wissensspeicher Expertenwissen über die Laserbearbeitungsprozesse der Laserbearbeitungsmaschine 2 zur Verfügung stellt. Im Folgenden werden die Komponenten bzw. Funktionen des Unterstützungssystems 1 sowie deren Arbeitsweise näher beschrieben:

Die Eingabefunktion **EF** dient der Festlegung von für den Laserbearbeitungsprozess charakteristischen Prozessgrößen **P1, P2,** ..., wobei für die Optimierung der Bearbeitungsparameter BP1, BP2, ... und/oder Regelparameter RP1, RP2, ... typischer Weise zumindest die Materialart und die Dicke des zu bearbeitenden Werkstücks als Prozessgrößen festgelegt werden müssen. Außerdem muss die gewünschte Bearbeitungsart als weitere Prozessgröße angegeben werden. Die Materialart und die Werkstückdicke können vom Bediener B eingegeben oder mit Hilfe von geeigneten (nicht gezeigten) Sensoren erfasst werden. Die Bearbeitungsart muss in der Regel durch den Bediener B vorgegeben werden.

Die Eingabefunktion EF dient auch zur Festlegung von für das Bearbeitungsergebnis des Laserbearbeitungsprozesses charakteristischen Zielgrößen **Z1, Z2,** ... durch den Bediener B: Der Bediener B entscheidet, was das Ziel der Parameteroptimierung sein soll, beispielsweise minimale Gratbildung (Zielgröße Z1), größtmögliche Homogenität der Schneidkante (Zielgröße Z2), geringe Rautiefe, maximale Bearbeitungsgeschwindigkeit oder minimaler Schneidgasverbrauch etc. Dabei kann der Bediener B eine einzelne Zielgröße, z.B. Z1, oder eine Kombination von Zielgrößen, z.B. Z1 und Z2, als Grundlage der Optimierung auswählen.

Die Grenzwertfunktion GF dient der Festlegung von Grenzwerten **GW** für die Bearbeitungsparameter BP1, BP2, ... und/oder Regelparameter RP1, RP2, ... in Abhängigkeit von den Prozessgrößen P1, P2, ... : Anhand der ausgewählten Prozessgrößen P1, P2, ... bzw. der Wertebelegung der Prozessgrößen P1, P2, ... legt das Unterstützungssystem 1 automatisch sinnvolle Grenzwerte GW für die Bearbeitungsparameter BP1, BP2, ... bzw. die Regelparameter RP1, RP2, ... fest, die die Grenzen für einen stabilen, reproduzierbaren Bearbeitungsprozess definieren. Dazu greift das Unterstützungssystem 1 auf die Datenbank DB zu, in der diese Grenzwerte GW für die möglichen Kombinationen von Prozessgrößen P1, P2, ... gespeichert sind, d.h. die Datenbank DB enthält Expertenwissen über den jeweils zu optimierenden Laserbearbeitungsprozess. Die Datenbank DB kann auch selbstlernend sein, d.h. deren Datenbestand kann auf der Basis der durchgeführten Parameteroptimierungen fortlaufend erweitert werden.

Die Versuchsplanungsfunktion PF dient der Erstellung oder Auswahl eines Versuchsplans für Bearbeitungsversuche auf Basis einer statistischen Variation der Bearbeitungsparameter BP1, BP2, ... und/oder Regelparameter RP1, RP2, ... innerhalb der festgelegten Grenzwerte GW. Das Unterstützungssystem 1 wählt beispielsweise anhand der Prozessgrößen P1, P2, ... und ggf. der Zielgrößen Z1, Z2, ... automatisch einen geeigneten Versuchsplan **VP** aus, der auf einer statistischen Variation von Parameter-Datensätzen mit den Bearbeitungsparametern BP1, BP2, ... und Regelparametern RP1, RP2, ... beruht und an die Grenzwerte GW für die Bearbeitungsparameter BP1, BP2, ... bzw. Regelparameter RP1, RP2, ... angepasst wird. Das Unterstützungssystem 1 kann zu diesem Zweck mit der Datenbank DB gekoppelt sein, in der die Versuchspläne VP gespeichert sind. Je nach der gewählten Kombination der Prozessgrößen P1, P2, ... umfasst der Versuchsplan VP eine Variation aller Bearbeitungsparameter BP1, BP2, ... bzw. Regelparameter RP1, RP2, ... oder lediglich eine Variation von ausgewählten Bearbeitungsparametern (z.B. BP1, BP2) bzw. Regelparametern (z.B. RP1, RP2), während andere Bearbeitungs- bzw. Regelparameter nicht statistisch variiert werden. Die Auswahl zwischen statistisch zu variierenden und nicht statistisch zu variierenden Parametern wird hierbei auf eine Weise getroffen, die weiter unten näher beschrieben wird. In die Versuchsplanungsfunktion PF ist eine Konturauswahlfunktion **KF** integriert, die zur Festlegung von für die Schneidversuche technologisch geeigneten Versuchskonturen **VK** in Abhängigkeit von den Prozessgrößen P1, P2,... dient. Zu diesem Zweck entnimmt die die Konturauswahlfunktion KF aus der Datenbank DB Versuchskonturen VK, die dort in Abhängigkeit von den möglichen Kombinationen der Prozessgrößen P1, P2,... gespeichert sind.

Das Unterstützungssystem 1 umfasst weiterhin eine Durchführungs- und Bewertungsfunktion DBF, welche die Durchführung und Bewertung der Bearbeitungsversuche steuert, indem der jeweilige Versuchsplan VP mit den festgelegten Versuchskonturen an einem Werkstück mit Hilfe der Laserbearbeitungsmaschine 2 abgearbeitet wird. Die Ergebnisse der Bearbeitung für die einzelnen Parameter-Datensätze mit den statistisch variierten Werten der Bearbeitungsparameter BP1, BP2, ... bzw. Regelparameter RP1, RP2, ... des Versuchsplans VP werden hinsichtlich der gewählten Zielgrößen Z1, Z2, ... bewertet. Die Bewertung kann durch den Bediener B beispielsweise anhand eines Schulnotensystems erfolgen. Eine objektivere Bewertung ist durch die Integration von Sensoren in die Laserbearbeitungsmaschine 2 möglich, die beispielsweise das Spektrum des Prozesslichts als indirekten Nachweis für die Schneidbarkeit des Werkstücks oder auch die Rautiefe oder den gebildeten Grat als Indikatoren für die Qualität des Bearbeitungsergebnisses messen.

Das Ergebnis dieser Bewertung wird von der Durchführungs- und Bewertungsfunktion DBF an die Modellbildungsfunktion MF übermittelt. Die Modellbildungsfunktion MF dient der Bildung einer Modells für den Laserbearbeitungsprozess durch Ermitteln der funktionellen Abhängigkeiten Z1 =f₁ (BP1, BP2, ...; RP1, RP2, ...), Z2 = f₂ (BP1, BP2, ... ; RP1, RP2, ...), ... der Zielgrößen Z1, Z2, ... von den Bearbeitungsparametern BP1, BP2, ... und/oder Regelparametern RP1, RP2, ... mit Hilfe einer Regressionsanalyse. Die Funktionen f₁, f₂ enthalten Modell-Koeffizienten, die durch die Regressionsanalyse bestimmt werden, indem für jeden Bearbeitungsversuch die zugehörigen Werte der Bearbeitungsparameter BP1, BP2, ... und/oder der Regelparameter RP1, RP2, ... sowie die jeweilige Bewertung der Zielgrößen Z1, Z2, ... in die Modellgleichung eingesetzt wird. Auf diese Weise wird mit Hilfe der Versuchsergebnisse das Regressionsmodell an den Laserbearbeitungsprozess angepasst.

Als Grundgleichung für die Modellbildung kann hierbei eine Regressionsgleichung zweiter Ordnung dienen, deren Wechselwirkungsterme, d.h. deren Terme, die ein Produkt aus zwei Einflussgrößen darstellen, z.B. (BP1 x BP2, BP1 x RP1 etc.) in Abhängigkeit von der Auswahl der Prozessgrößen P1, P2, ... und der Zielgrößen Z1, Z2, ... berücksichtigt oder vernachlässigt werden. Für eine jeweilige Kombination von Prozessgrößen P1, P2, ... und Zielgrößen Z1, Z2, ... kann beispielsweise in der Datenbank DB eine geeignete Grundgleichung hinterlegt sein, in der die Wechselwirkungsterme von Einflussgrößen, die bei der Wechselwirkung miteinander lediglich einen geringen oder überhaupt keinen Einfluss auf eine jeweilige Zielgröße Z1, Z2, ... haben, vernachlässigt werden. Da der zu dem vernachlässigten Wechselwirkungsterm gehörige Modell-Koeffizient nicht durch die Regressionsanalyse bestimmt werden muss, reduziert sich die Zahl der durchzuführenden Bearbeitungsversuche.

Anhand der durch die Modellbildungsfunktion MF ermittelten Abhängigkeit der Zielgrößen Z1, Z2, ... von den Bearbeitungsparametern BP1, BP2, ... und/oder Regelparametern RP1, RP2 für den jeweiligen Laserbearbeitungsprozess können die optimierten Bearbeitungsparameter BP1OPT, BP20PT bzw. Regelparameter RP1OPT, RP2OPT, ... für die gewählten Zielgrößen Z1, Z2, ...berechnet werden. Zu diesem Zweck umfasst das Unterstützungssystem 1 die Optimierungsfunktion OF, die einen optimalen Parameter-Datensatz für die gewählte(n) Zielgröße(n) Z1, Z2, ... mit Hilfe der angepassten Modellgleichung berechnet.

Im Folgenden wird beispielhaft ein Verfahrensablauf für die Optimierung der Bearbeitungsparameter BP1, BP2, ... und/oder der Regelparameter RP1, RP2, ... der Laserschneidmaschine 2 mit Hilfe des Unterstützungssystems 1 anhand eines Laserschneidprozesses beschrieben:

Der Bediener B gibt in einer Bedienoberfläche (nicht gezeigt) der Maschinensteuerung der Laserbearbeitungsmaschine 2, an der die Eingabefunktion EF implementiert ist, die Information ein, welche Materialart (z.B. Edelstahl, Baustahl, Aluminium, ... Prozessgröße P1) und welche Dicke (Prozessgröße P2) das zu bearbeitende Werkstück aufweist und auf welche Art es bearbeitet werden soll (durch Schneiden, Prozessgröße P3). Wie oben beschrieben kann die Laserbearbeitungsmaschine 2 auch über einen geeigneten Sensor verfügen, der die Dicke des Werkstücks direkt bestimmt und diese Information an das Unterstützungssystem 1 überträgt. Neben den Prozessgrößen P1, P2, ... muss der Bediener B angeben, was die Zielgrößen Z1, Z2, ... der Optimierung sind, d.h. welche Eigenschaften des Prozesses oder welche Schneidergebnisse optimiert werden sollen.

Aus dieser Information wählt die Grenzwertfunktion GF automatisch Grenzwerte für diejenigen Bearbeitungs- bzw. Schneidparameter BP1, BP2, ... (Fokuslage, Laserleistung, Gasdruck, Verfahrgeschwindigkeit, Tastfrequenz, Laserstrahldurchmesser, Düsenabstand zum Werkstück und Düsendurchmesser etc.) aus, die variiert werden sollen. Für die Vorgabe der Grenzwerte kann die Grenzwertfunktion GF mit Bearbeitungsparameter-Datentabellen verknüpft sein, die in der Datenbank DB abgelegt sind und aus denen die Grenzwertfunktion GF geeignete Werte entnimmt. Die Grenzwertfunktion GF kann hierfür auch lediglich einen Vorschlag unterbreiten, den der Bediener B mit Hilfe einer Bearbeitungsfunktion **BF** akzeptieren oder modifizieren kann, die ebenfalls an der Bedienoberfläche vorgesehen werden kann.

Die Versuchsplanungsfunktion PF wählt dann einen Versuchsplan VP aus, der mit Hilfe der Methoden der statistischen Versuchsplanung (Design of Experiments) erstellt wurde. In dem Versuchsplan VP werden durch statistische Variation Werte für die Schneidparameter innerhalb der gewählten Grenzwerte festgelegt. In der in die Versuchsplanungsfunktion PF integrierten Konturauswahlfunktion KF werden für die Schneidversuche technologisch geeignete zu schneidende Versuchskonturen VK in Abhängigkeit von den Prozessgrößen P1 (Materialart), P2 (Dicke des Werkstücks), P3 (Schneidende Bearbeitung), ... festgelegt. Zu diesem Zweck kann die Konturauswahlfunktion KF z.B. Kontur-Variablen enthalten, deren Wertebelegung in Abhängigkeit von den Prozessgrößen P1, P2, ... erfolgt. Die Kontur-Variablen können beispielsweise die Art der Testkontur (z.B. Mäander, Einzelquadrate, Langloch-Mäander für schnelles Schneiden etc.), die Konturgröße, den Konturabstand oder den Konturrundungsradius umfassen. Für die Wertebelegung der Kontur-Variablen kann die Konturauswahlfunktion KF mit Konturparameter-Datentabellen verknüpft sein, die in der Datenbank DB abgelegt sind und aus denen die Konturauswahlfunktion KF geeignete Werte entnimmt. Auf diese Weise werden Schneidparameter-Datensätze festgelegt, mit denen die Laserbearbeitungsmaschine 2 selbständig gemäß eines hinterlegten Steuerungsprogramms die Versuchskonturen VK schneidet, die ebenfalls mit Hilfe der Laserbearbeitungsmaschine 2 z.B. mit Zahlen beschriftet werden können, um eine genaue Zuordnung zum jeweils eingestellten Parameter-Datensatz zu ermöglichen.

Nach dem Schneiden der Versuchskonturen hat der Bediener B folgende Möglichkeiten: Er kann direkt eine oder mehrere Versuchsnummern eingeben, die ein ausreichend gutes Schneidergebnis erzielt haben. In diesem Fall zeigt das Unterstützungssystem 1 die dazugehörigen Parametersätze dem Bediener B an und wählt einen Datensatz aus zur Speicherung - nach Bestätigung durch den Bediener B - in der Maschinensteuerung sowie in der Datenbank DB. Bei Nicht-Akzeptanz dieses Datensatzes aufgrund von für den Bediener nicht akzeptabler Werte der optimierten Schneidparameter (z.B. zu niedrige Vorschubgeschwindigkeit) gibt der Bediener B diese Information ebenfalls an die Versuchsdurchführungs- und Bewertungsfunktion DBF des Unterstützungssystems 1 weiter.

Wenn keiner der Schneidversuche ein optimales Ergebnis zeigt, bewertet der Bediener B die Schneidergebnisse nach einem vorgegebenen Bewertungsschema, z.B. viel/wenig/kaum/keine Gratbildung oder nach dem Schulnotensystem. Nach der Bewertung der Schneidergebnisse durch den Bediener B erstellt die Modellbildungsfunktion MF des Unterstützungssystems 1 mittels Regressionsanalyse auf die oben beschriebene Weise eine Modellgleichung für den Schneidprozess. Mit dieser Modellgleichung wird anschließend in der Optimierungsfunktion OF ein optimierter Parametersatz berechnet, den der Bediener B akzeptieren oder wie oben beschrieben unter Angabe der unpassenden Parameter an das Unterstützungssystem 1 ablehnen kann.

Wird der optimierte Parametersatz vom Bediener akzeptiert, so wird mit diesem optimierten Parametersatz ein Teil geschnitten, um die erwartete Qualität zu bestätigen. Der Bediener kann auch mehrere optimierte Parametersätze auswählen und die Entscheidung über den am besten für die Anwendung geeigneten Parametersatz nach dem Schneidvorgang mit allen optimierten Parametersätzen treffen.

Wird der von der Optimierungsfunktion OF bestimmte optimierte Parametersatz (BP1OPT, BP20PT, RP1OPT, RP20PT) nicht akzeptiert, so wählt das Unterstützungssystem 1 in der Versuchsplanungsfunktion PF anhand der eingegebenen Informationen einen verfeinerten Versuchsplan VP mit weiteren Parameter-Datensätzen aus. Die Parametergrenzen GW dieses neu ausgewählten Versuchsplans können innerhalb oder außerhalb der bisher getesteten Parametergrenzen liegen und werden durch eine Anpassungsfunktion **AF** in Abhängigkeit vom ermittelten optimierten Parametersatz ausgewählt. Insbesondere können hierbei neue Parametergrenzen GW festgelegt werden, die nur einen kleinen Parameterbereich um den bereits ermittelten optimierten Parametersatz abdecken. Anschließend werden erneut mit diesen neu ermittelten Parametersätzen Schneidversuche durchgeführt und das Schneidergebnis bewertet. Dieses Verfahren wird iterativ so lange durchgeführt, bis eine Versuchskontur VK mit ausreichend guter bzw. optimaler Schneidqualität unter akzeptablen Bedingungen geschnitten werden kann.

Das oben dargestellte Verfahren bzw. das Unterstützungssystem 1 kann dahingehend modifiziert werden, dass ein oder mehrere Schneidparameter (z.B. die Schneidgeschwindigkeit) nicht als statistisch variierbare Parameter in den Versuchsplan VP eingehen, sondern entweder auf einen konstanten Wert festgesetzt oder bei der Durchführung des Versuchsplanes VP kontinuierlich variiert werden. Diese Vorgehensweise ist dann sinnvoll, wenn bereits vor der Optimierung bekannt ist, dass bestimmte Schneidparameter einen festen Wert haben müssen oder sollen oder dass die Variation bestimmter Schneidparameter keinen Einfluss auf das Versuchsergebnis hat. Wird beispielsweise die Bearbeitungsgeschwindigkeit nicht als Bearbeitungsparameter variiert, sondern als Zielgröße gesetzt, wird zu jedem Parameter-Datensatz als Ergebnis die maximal mögliche Geschwindigkeit erhalten. Der Bediener B kann in diesem Fall die maximale Schneidgeschwindigkeit bei für ihn noch akzeptabler Qualität der Schnittkanten auswählen.

Eine Erweiterung des Verfahrens bzw. des Unterstützungssystems 1 ist auch dahingehend möglich, dass mittels einer geeigneten Sensorik vollautomatisch der optimale Parametersatz identifiziert bzw. iterativ ermittelt wird. Dazu müssen Sensoren an der Laserbearbeitungsmaschine 2 vorgesehen sein, die entweder während des Schneidprozesses Kenngrößen des Schneidprozesses ermitteln bzw. überwachen und/oder nach dem Schneidprozess Aussagen über die Qualität des Schneidergebnisses ermöglichen. Die so ermittelten Werte der Zielgrößen Z1, Z2, ...dienen dann zur Anpassung der Grundgleichung des Modells an den durchgeführten Laserschneidprozess mit Hilfe der Regressionsanalyse.

Eine einfache Variante einer solchen vollständig automatisierten Parameteroptimierung kann z.B. dadurch realisiert werden, dass mit den durch den Versuchsplan VP vorgegebenen Versuchs-Datensätzen der Bearbeitungsparameter BP1, BP2, ... und/oder Regelparameter RP1, RP2, ... kurze parallele Schnitte in das Werkstück eingebracht werden und dabei kamerabasiert das Prozesslicht analysiert wird sowie im Anschluss an den Schneidprozess die Schnittkanten oder der Schnittspaltdurchmesser vermessen werden. Es versteht sich, dass ein solches vollautomatisches Identifizieren bzw. iteratives Ermitteln des optimalen Parametersatzes nicht auf einen Schneidprozess beschränkt ist, sondern auch bei anderen Laserbearbeitungsprozessen eingesetzt werden kann.

Mit Hilfe des oben beschriebenen Verfahrens bzw. des Unterstützungssystems 1 wird der Bediener einer Laserbearbeitungsmaschine bei der Optimierung von Bearbeitungs- bzw. Regelparametern entlastet, indem dieser auf fertige, automatisch erstellte Versuchspläne VP zurückgreifen kann, eine automatische Festlegung der technologisch sinnvollen Grenzwerte GW erfolgt und eine automatische Auswahl von Versuchskonturen VK durchgeführt wird. Das oben beschriebene Verfahren bzw. Unterstützungssystem 1 kann hierbei durch geeignete Hardware- und/oder SoftwareKomponenten auf der Laserbearbeitungsmaschine 2 implementiert werden. Es versteht sich, dass das Unterstützungssystem 1 und das zugehörige Verfahren bei geeigneter Modifizierung nicht nur in der Laserbearbeitung, sondern auch bei anderen Bearbeitungsprozessen vorteilhaft eingesetzt werden können.

## Patentansprüche

1. Unterstützungssystem (1) zur Optimierung von Bearbeitungsparametern (BP1, BP2, ...) und/oder Regelparametern (RP1, RP2, ...) eines Laserbearbeitungsprozesses, insbesondere eines Laserschneidprozesses, umfassend:
eine Eingabefunktion (EF) zur Festlegung von mindestens einer für den Laserbearbeitungsprozess charakteristischen Prozessgröße (P1, P2, ...) sowie von mindestens einer für das Bearbeitungsergebnis des Laserbearbeitungsprozesses charakteristischen Zielgröße (Z1, Z2, ...) insbesondere durch einen Bediener (B),
eine Grenzwertfunktion (GF) zur Festlegung von Grenzwerten (GW) für die Bearbeitungsparameter (BP1, BP2, ...) und/oder Regelparameter (RP1, RP2, ...) in Abhängigkeit von der mindestens einen Prozessgröße (P1, P2, ...), eine Versuchsplanungsfunktion (PF) zur Festlegung eines Versuchsplans für Bearbeitungsversuche mit statistischer Variation der Bearbeitungsparameter (BP1, BP2, ...) und/oder Regelparameter (RP1, RP2, ...) innerhalb der festgelegten Grenzwerte (GW),
eine Versuchsdurchführungs- und Bewertungsfunktion (DBF) zur Steuerung der Durchführung der Bearbeitungsversuche sowie zur Bewertung der Versuchsergebnisse anhand der mindestens einen Zielgröße (Z1, Z2, ...),
eine Modellbildungsfunktion (MF) zur Bildung eines Modells für den Laserbearbeitungsprozess durch Ermitteln des Einflusses der Bearbeitungsparameter (BP1, BP2, ...) und/oder Regelparameter (RP1, RP2, ...) auf die mindestens eine Zielgröße (Z1, Z2, ...) mit Hilfe einer Regressionsanalyse, sowie
eine Optimierungsfunktion (OF) zur Bestimmung von optimierten Bearbeitungsparametern (BP1OPT, BP2OPT, ...) und/oder Regelparametern (RP1OPT, RP2OPT, ...) für die mindestens eine Zielgröße (Z1, Z2, ...) mit Hilfe des Modells.

2. Unterstützungssystem nach Anspruch 1, weiter umfassend:
eine Konturauswahlfunktion (KF) zur Festlegung von bei den Bearbeitungsversuchen zu bearbeitenden, insbesondere zu schneidenden Versuchskonturen (VK) in Abhängigkeit von der mindestens einen Prozessgröße (P1, P2, ...).

3. Unterstützungssystem nach Anspruch 1 oder 2, weiter umfassend:
eine Bearbeitungsfunktion (BF) zur Bearbeitung der Grenzwerte (GW) durch den Bediener (B).

4. Unterstützungssystem nach einem der vorhergehenden Ansprüche, weiter umfassend:
eine Anpassungsfunktion (AF) zur Anpassung der Grenzwerte (GW) der Bearbeitungsparameter (BP1, BP2, ...) und/oder Regelparameter (RP1, RP2, ...) für einen weiteren Versuchsplan (VP) bei Ablehnung der optimierten Bearbeitungsparameter (BP1OPT, BP2OPT, ...) und/oder Regelparameter (RP1OPT, RP2OPT, ...) durch den Bediener (B).

5. Unterstützungssystem nach einem der vorhergehenden Ansprüche, weiter umfassend:
eine Datenbank (DB) zur Speicherung der Grenzwerte (GW), der Versuchspläne (VP) und/oder der Versuchskonturen (VK) in Abhängigkeit von der mindestens einen Prozessgröße (P1, P2, ...).

6. Unterstützungssystem nach einem der vorhergehenden Ansprüche, bei dem die Prozessgrößen (P1, P2, ...) ausgewählt sind aus der Gruppe umfassend:
Materialart, Materialdicke, Gasart, Brennweite der Fokussieroptik und Bearbeitungsart.

7. Unterstützungssystem nach einem der vorhergehenden Ansprüche, bei dem die Bearbeitungsparameter (BP1, BP2, ...) ausgewählt sind aus der Gruppe umfassend: Laserleistung, Fokuslage, Bearbeitungsgeschwindigkeit, Tastfrequenz, Bearbeitungsgasdruck, Laserstrahldurchmesser, Düsenabstand und Düsendurchmesser.

8. Unterstützungssystem nach einem der vorhergehenden Ansprüche, bei dem die Zielgrößen (Z1, Z2, ...) ausgewählt sind aus der Gruppe umfassend:
Gratbildung, Homogenität der Schnittkante, Qualität bei maximaler Bearbeitungsgeschwindigkeit oder minimalem Gasverbrauch, Rautiefe, minimale Schneidfehler.

9. Unterstützungssystem nach einem der vorhergehenden Ansprüche, bei dem die Modellbildungsfunktion (MF) zur Ermittlung des Einflusses der Bearbeitungsparameter (BP1, BP2, ...) und/oder Regelparameter (RP1, RP2, ...) auf die mindestens eine Zielgröße (Z1, Z2, ...) eine Regressionsgleichung zweiter Ordnung mit Wechselwirkungstermen umfasst, die in Abhängigkeit von den festgelegten Prozessgrößen (P1, P2, ...) und Zielgrößen (Z1, Z2, ...) bei der Modellbildung berücksichtigt oder vernachlässigt werden.

10. Steuerungsverfahren zum Optimieren von Bearbeitungsparametern (BP1, BP2, ...) und/oder Regelparametern (RP1, RP2, ...) eines Laserbearbeitungsprozesses, insbesondere eines Laserschneidprozesses, mit Hilfe des Unterstützungssystems nach einem der Ansprüche 1 bis 8, umfassend:
Festlegen mindestens einer für den Laserbearbeitungsprozess charakteristischen Prozessgröße (P1, P2, ...) sowie mindestens einer für das Bearbeitungsergebnis des Laserbearbeitungsprozesses charakteristischen Zielgröße (Z1, Z2, ...) insbesondere durch einen Bediener (B),
Festlegen von Grenzwerten (GW) für die Bearbeitungsparameter (BP1, BP2, ...) und/oder Regelparameter (RP1, RP2, ...) in Abhängigkeit von der mindestens einen Prozessgröße (P1, P2, ...) durch das Unterstützungssystem,
Festlegen eines Versuchsplans (VP) für Bearbeitungsversuche mit statistischer Variation der Bearbeitungsparameter (BP1, BP2, ...) und/oder Regelparameter (RP1, RP2, ...) innerhalb der festgelegten Grenzwerte (GW) durch das Unterstützungssystem,
Steuern der Durchführung der Bearbeitungsversuche sowie Bewerten der Versuchsergebnisse anhand der mindestens einen Zielgröße (Z1, Z2, ...),
Bilden eines Modells für den Laserbearbeitungsprozess durch Ermitteln des Einflusses der Bearbeitungsparameter (BP1, BP2, ...) und/oder Regelparameter (RP1, RP2, ...) auf die mindestens eine Zielgröße (Z1, Z2, ...) mit Hilfe einer Regressionsanalyse durch das Unterstützungssystem, sowie
Bestimmen von optimierten Bearbeitungsparametern (BP1OPT, BP2OPT, ...) und/oder Regelparametern (RP1OPT, RP20PT, ...) für die mindestens eine Zielgröße (Z1, Z2, ...) mit Hilfe des Modells.

11. Verfahren nach Anspruch 10, weiter umfassend: Festlegen von bei den Bearbeitungsversuchen zu bearbeitenden, insbesondere zu schneidenden Versuchskonturen (VK) in Abhängigkeit von der mindestens einen Prozessgröße (P1, P2, ...) durch das Unterstützungssystem.

12. Verfahren nach Anspruch 10 oder 11, weiter umfassend: Anpassen der Grenzwerte (GW) für die Bearbeitungsparameter (BP1, BP2, ...) und/oder Regelparameter (RP1, RP2, ...) durch das Unterstützungssystem für einen weiteren Versuchsplan (VP) bei Ablehnung der optimierten Bearbeitungsparameter (BP1OPT, BP2OPT, ...) und/oder Regelparameter (RP1OPT, RP2OPT, ...) durch den Bediener (B).

13. Verfahren nach einem der Ansprüche 10 bis 12, bei dem zur Ermittlung des Einflusses der Bearbeitungsparameter (BP1, BP2, ...) und/oder Regelparameter (RP1, RP2, ...) auf die mindestens eine Zielgröße (Z1, Z2, ...) eine Regressionsgleichung zweiter Ordnung mit Wechselwirkungstermen aufgestellt wird, die in Abhängigkeit von den festgelegten Prozessgrößen (P1, P2, ...) und Zielgrößen (Z1, Z2, ...) bei der Modellbildung berücksichtigt oder vernachlässigt werden.

14. Verfahren nach einem der Ansprüche 10 bis 13, bei dem mindestens ein Bearbeitungsparameter (BP1, BP2, ...) und/oder Regelparameter (RP1, RP2, ...) im Versuchsplan (VP) nicht statistisch variiert wird.

15. Computerprogrammprodukt, welches Codemittel aufweist, die zum Durchführen aller Schritte des Verfahrens nach einem der Ansprüche 10 bis 14 angepasst sind, wenn das Programm auf einer Datenverarbeitungsanlage abläuft.

## Claims

1. A support system (1) for optimizing processing parameters (BP1, BP2, ...) and/or regulating parameters (RP1, RP2, ...) of a laser processing process, in particular a laser cutting process, comprising:
an entry function (EF) for definition of at least one process variable (P1, P2, ...) characteristic of the laser processing process and at least one target variable (Z1, Z2, ...) characteristic of the processing result of the laser processing process, in particular by an operator (B),
a limit value function (GF) for definition of limit values (GW) for the processing parameters (BP1, BP2, ...) and/or regulating parameters (RP1, RP2, ...) in dependence on the at least one process variable (P1, P2, ...),
a design of experiments function (PF) for definition of a design of experiments for processing experiments with statistical variation of the processing parameters (BP1, BP2, ...) and/or regulating parameters (RP1, RP2, ...) within the defined limit values (GW),
an experiment performing and rating function (DBF) for controlling the performance of the processing experiments and for rating the experimental results on the basis of the at least one target variable (Z1, Z2, ...),
a model building function (MF) for building a model for the laser processing process by determining the influence of the processing parameters (BP1, BP2, ...) and/or regulating parameters (RP1, RP2, ...) on the at least one target variable (Z1, Z2, ...) with the aid of a regression analysis, and
an optimization function (OF) for determination of optimized processing parameters (BP1OPT, BP2OPT, ...) and/or regulating parameters (RP1OPT, RP2OPT, ...) for the at least one target variable (Z1, Z2, ...) with the aid of the model.

2. A support system according to claim 1, further comprising:
a contour selecting function (KF) for defining experimental contours (VK) to be processed, in particular cut, in the processing experiments, in dependence on the at least one process variable (P1, P2, ...).

3. A support system according to claim 1 or 2, further comprising:
a processing function (BF) for processing of the limit values (GW) by the operator (B).

4. A support system according to any one of the preceding claims, further comprising:
an adaptation function (AF) for adaptation of the limit values (GW) of the processing parameters (BP1, BP2, ...) and/or regulating parameters (RP1, RP2, ...) for a further design of experiments (VP) upon rejection of the optimized processing parameters (BP1OPT, BP2OPT, ...) and/or regulating parameters (RP1OPT, RP2OPT, ...) by the operator (B).

5. A support system according to any one of the preceding claims, further comprising:
a database (DB) for storing the limit values (GW), the designs of experiments (VP) and/or the experimental contours (VK) in dependence on the at least one process variable (P1, P2, ...).

6. A support system according to any one of the preceding claims, in which the process variables (P1, P2, ...) are selected from the group comprising: type of material, thickness of material, type of gas, focal length of the focusing lens system, and type of processing.

7. A support system according to any one of the preceding claims, in which the processing parameters (BP1, BP2, ...) are selected from the group comprising:
laser output power, focus position, processing speed, pulse frequency, processing gas pressure, laser beam diameter, nozzle spacing and nozzle diameter.

8. A support system according to any one of the preceding claims, in which the target variables (Z1, Z2, ...) are selected from the group comprising: burr formation, homogeneity of the cut edge, quality at maximum processing speed or with minimal gas consumption, surface roughness, minimal cutting faults.

9. A support system according to any one of the preceding claims, in which the model building function (MF) for determining the influence of the processing parameters (BP1, BP2, ...) and/or regulating parameters (RP1, RP2, ...) on the at least one target variable (Z1, Z2, ...) comprises a second-order regression equation with interaction terms which are taken into consideration or disregarded in dependence on the defined process variables (P1, P2, ...) and target variables (Z1, Z2, ...) when building the model.

10. A control method for optimizing processing parameters (BP1, BP2, ...) and/or regulating parameters (RP1, RP2, ...) of a laser processing process, in particular a laser cutting process, with the aid of the support system according to any one of claims 1 to 8, comprising:
definition of at least one process variable (P1, P2, ...) characteristic of the laser processing process and at least one target variable (Z1, Z2, ...) characteristic of the processing result of the laser processing process, in particular by an operator (B),
definition of limit values (GW) for the processing parameters (BP1, BP2, ...) and/or regulating parameters (RP1, RP2, ...) in dependence on the at least one process variable (P1, P2, ...) by the support system,
definition of a design of experiments (VP) for processing experiments with statistical variation of the processing parameters (BP1, BP2, ...) and/or regulating parameters (RP1, RP2, ...) within the defined limit values (GW) by the support system,
controlling of the performance of the processing experiments and rating of the experimental results on the basis of the at least one target variable (Z1, Z2, ...),
building of a model for the laser processing process by determining the influence of the processing parameters (BP1, BP2, ...) and/or regulating parameters (RP1, RP2, ...) on the at least one target variable (Z1, Z2, ...) with the aid of a regression analysis by the support system, and
determination of optimized processing parameters (BP1OPT, BP2OPT, ...) and/or regulating parameters (RP1 OPT, RP2OPT, ...) for the at least one target variable (Z1, Z2, ...) with the aid of the model.

11. A method according to claim 10, further comprising: definition by the support system of experimental contours (VK) to be processed, in particular cut, in the processing experiments, in dependence on the at least one process variable (P1, P2, ...).

12. A method according to claim 10 or 11, further comprising: adaptation of the limit values (GW) for the processing parameters (BP1, BP2, ...) and/or regulating parameters (RP1, RP2, ...) by the support system for a further design of experiments (VP) upon rejection of the optimized processing parameters (BP1OPT, BP20PT, ...) and/or regulating parameters (RP1OPT, RP2OPT, ...) by the operator (B).

13. A method according to any one of claims 10 to 12, in which, for determining the influence of the processing parameters (BP1, BP2, ...) and/or regulating parameters (RP1, RP2, ...) on the at least one target variable (Z1, Z2, ...), a second-order regression equation with interaction terms is set up, which interaction terms are taken into consideration or disregarded in dependence on the defined process variables (P1, P2, ...) and target variables (Z1, Z2, ...) when building the model.

14. A method according to any one of claims 10 to 13, in which at least one processing parameter (BP1, BP2, ...) and/or regulating parameter (RP1, RP2, ...) is not statistically varied in the design of experiments (VP).

15. A computer program product having code means adapted to carry out all the steps of the method according to any one of claims 10 to 14 when the program is run on a data processing system.

## Revendications

1. Système de support (1) permettant d'optimiser des paramètres d'usinage (BP1, BP2, ...) et/ou des paramètres de réglage (RP1, RP2, ...) d'un procédé d'usinage au laser, en particulier d'un procédé de coupe au laser, comprenant :
une fonction d'entrée (EF) permettant de définir au moins une variable de procédé (P1, P2, ...) caractéristique du procédé d'usinage au laser ainsi qu'au moins une variable cible (Z1, Z2, ...) caractéristique du résultat d'usinage du procédé d'usinage au laser, en particulier par un opérateur (B),
une fonction de valeur limite (GF) permettant de définir des valeurs limites (GW) pour les paramètres d'usinage (BP1, BP2, ...) et/ou paramètres de réglage (RP1, RP2, ...) en fonction de ladite au moins une variable de procédé (P1, P2, ...),
une fonction de planification d'essais (PF) permettant de définir un plan d'essais pour des essais d'usinage avec variation statistique des paramètres d'usinage (BP1, BP2, ...) et/ou paramètres de réglage (RP1, RP2, ...) à l'intérieur des valeurs limites (GW) définies,
une fonction d'exécution et d'évaluation d'essais (DBF) permettant de commander l'exécution des essais d'usinage et d'évaluer les résultats des essais à l'aide de ladite au moins une variable cible (Z1, Z2, ...),
une fonction de formation de modèle (MF) permettant de former un modèle du procédé d'usinage au laser par détermination de l'influence des paramètres d'usinage (BP1, BP2, ...) et/ou paramètres de réglage (RP1, RP2, ...) sur ladite au moins une variable cible (Z1, Z2, ...) à l'aide d'une analyse par régression, et
une fonction d'optimisation (OF) permettant de déterminer des paramètres d'usinage (BP1OPT, BP2OPT, ...) et/ou paramètres de réglage (RP1OPT, RP2OPT, ...) optimisés pour ladite au moins une variable cible (Z1, Z2, ...) à l'aide du modèle.

2. Système de support selon la revendication 1, comprenant en outre :
une fonction de sélection de contour (KF) permettant de définir des contours d'essai (VK) à usiner, en particulier à couper, lors des essais d'usinage en fonction de ladite au moins une variable de procédé (P1, P2, ...).

3. Système de support selon la revendication 1 ou 2, comprenant en outre :
une fonction de traitement (BF) permettant à l'opérateur (B) de traiter les valeurs limites (GW).

4. Système de support selon une des revendications précédentes, comprenant en outre :
une fonction d'adaptation (AF) permettant d'adapter les valeurs limites (GW) des paramètres d'usinage (BP1, BP2, ...) et/ou paramètres de réglage (RP1, RP2, ...) pour un autre plan d'essais (VP) en cas de rejet par l'opérateur (B) des paramètres d'usinage (BP1OPT, BP2OPT, ...) et/ou paramètres de réglage (RP1OPT, RP2OPT, ...) optimisés.

5. Système de support selon une des revendications précédentes, comprenant en outre :
une base de données (DB) permettant de stocker les valeurs limites (GW), les plans d'essais (VP) et/ou les contours d'essai (VK) en fonction de ladite au moins une variable de procédé (P1, P2, ...).

6. Système de support selon une des revendications précédentes, dans lequel les variables de procédé (P1, P2, ...) sont sélectionnées dans le groupe comprenant :
type de matériau, épaisseur de matériau, type de gaz, distance focale de l'optique de focalisation et type d'usinage.

7. Système de support selon une des revendications précédentes, dans lequel les paramètres d'usinage (BP1, BP2, ...) sont sélectionnés dans le groupe comprenant :
puissance du laser, position du foyer, vitesse d'usinage, fréquence d'impulsions, pression du gaz d'usinage, diamètre du faisceau laser, distance de la buse et diamètre de la buse.

8. Système de support selon une des revendications précédentes, dans lequel les variables cibles (Z1, Z2, ...) sont sélectionnées dans le groupe comprenant :
formation de bavures, homogénéité de l'arête de coupe, qualité à la vitesse d'usinage maximale ou consommation de gaz minimale, profondeur de rugosité, erreur de coupe minimale.

9. Système de support selon une des revendications précédentes, dans lequel la fonction de formation de modèle (MF) permettant de déterminer l'influence des paramètres d'usinage (BP1, BP2, ...) et/ou paramètres de réglage (RP1, RP2, ...) sur ladite au moins une variable cible (Z1, Z2, ...) comprend une équation de régression du deuxième ordre avec des termes d'interaction qui sont pris en compte ou négligés en fonction des variables de procédé (P1, P2, ...) et variables cibles (Z1, Z2, ...) définies.

10. Procédé de commande permettant d'optimiser des paramètres d'usinage (BP1, BP2, ...) et/ou des paramètres de réglage (RP1, RP2, ...) d'un procédé d'usinage au laser, en particulier d'un procédé de coupe au laser à l'aide du système de support selon une des revendications 1 à 8, comprenant :
définition d'au moins une variable de procédé (P1, P2, ...) caractéristique du procédé d'usinage au laser et d'au moins une variable cible (Z1, Z2, ...) caractéristique du résultat d'usinage du procédé d'usinage au laser, en particulier par un opérateur (B),
définition de valeurs limites (GW) pour les paramètres d'usinage (BP1, BP2, ...) et/ou paramètres de réglage (RP1, RP2, ...) en fonction de ladite au moins une variable de procédé (P1, P2, ...) par le système de support,
définition d'un plan d'essais (VP) pour des essais d'usinage avec variation statistique des paramètres d'usinage (BP1, BP2, ...) et/ou paramètres de réglage (RP1, RP2, ...) à l'intérieur des valeurs limites (GW) définies par le système de support,
commande de l'exécution des essais d'usinage et évaluation des résultats des essais à l'aide de ladite au moins une variable cible (Z1, Z2, ...),
formation d'un modèle du procédé d'usinage au laser par détermination de l'influence des paramètres d'usinage (BP1, BP2, ...) et/ou paramètres de réglage (RP1, RP2, ...) sur ladite au moins une variable cible (Z1, Z2, ...) à l'aide d'une analyse par régression par le système de support, et
détermination de paramètres d'usinage (BP1OPT, BP2OPT, ...) et/ou paramètres de réglage (RP1OPT, RP2OPT, ...) optimisés pour ladite au moins une variable cible (Z1, Z2, ...) à l'aide du modèle.

11. Procédé selon la revendication 10, comprenant en outre : définition de contours d'essai (VK) à usiner, en particulier à couper, en fonction de ladite au moins une variable de procédé (P1, P2, ...) par le système de support.

12. Procédé selon la revendication 10 ou 11, comprenant en outre : adaptation des valeurs limites (GW) pour les paramètres d'usinage (BP1, BP2, ...) et/ou paramètres de réglage (RP1, RP2, ...) par le système de support pour un autre plan d'essais (VP) en cas de rejet par l'opérateur (B) des paramètres d'usinage (BP1OPT, BP2OPT, ...) et/ou paramètres de réglage (RP1OPT, RP2OPT, ...) optimisés.

13. Procédé selon une des revendications 10 à 12, dans lequel, pour déterminer l'influence des paramètres d'usinage (BP1, BP2, ...) et/ou paramètres de réglage (RP1, RP2, ...) sur ladite au moins une variable cible (Z1, Z2, ...), il est posé une équation de régression du deuxième ordre avec des termes d'interaction qui sont pris en compte ou négligés en fonction des variables de procédé (P1, P2, ...) et variables cibles (Z1, Z2, ...) définies.

14. Procédé selon une des revendications 10 à 13, dans lequel on fait varier au moins un paramètre d'usinage (BP1, BP2, ...) et/ou paramètre de réglage (RP1, RP2, ...) de manière non statistique dans le plan d'essais (VP).

15. Produit programme d'ordinateur qui présente des moyens de codage qui permettent d'exécuter toutes les étapes du procédé selon une des revendications 10 à 14 quand le programme se déroule sur un système de traitement de données.
